# EUROPEAN PATENT APPLICATION

(11) **EP 4 485 665 A1**
(43) Date of publication of application: **01.01.2025**
(21) Application number: 22926741.4
(22) Date of filing: 26.09.2022
(51) Int. Cl.: H01M 50/434, H01M 50/446, H01M 50/449, H01M 50/40, H01M 50/403, H01M 10/052

(54) **COATING SEPARATOR, PREPARATION METHOD FOR COATING SEPARATOR, AND BATTERY**

(30) Priority: 21.02.2022 WO PCT/CN2022/077087; 28.07.2022 WO PCT/CN2022/108551
(71) Applicant: Shenzhen Senior Technology Material Co., Ltd., Shenzhen, Guangdong 518106 (CN)
(72) Inventor: WANG, Yanjie, Shenzhen, Guangdong 518106 (CN); LIAO, Zhiheng, Shenzhen, Guangdong 518106 (CN); SHEN, Jianqiang, Changzhou, Jiangsu 213100 (CN); KONG, Debing, Shenzhen, Guangdong 518106 (CN); ZHANG, Xiaomin, Shenzhen, Guangdong 518106 (CN)
(74) Representative: Gill Jennings & Every LLP
(86) International application number: PCT/CN2022/121422
(87) International publication number: WO 2023/155436

(57) **Abstract**

Provided are a coated separator, a preparation method of a coated separator, and a battery. Mixing first nanofibers (21) having similar sizes in a first coating layer (20) and mixing second nanofibers (31) having similar sizes in a second coating layer (30), avoids the problem that nanofibers with similar surface energy tends to agglomerate due to a huge difference in their surface energy, which is caused by large size difference between different nanofibers, and greatly improves the uniformity of mixing between nanofibers. Moreover, by setting the first coating layer (20) to be a mixture of large-size first nanofibers (21) and large-particle-diameter first ceramic particles (22) and setting the second coating layer (30) to be a mixture of small-size second nanofibers (31) and small-particle-diameter second ceramic particles (32), the first coating layer (20) has a large aperture and a strong skeleton structure, causing the coated separator to maintain high heat resistance and high permeability. The second coating layer (30) having a small aperture can improve the transmission capability of lithium ions, and reduce the risk of electrochemical stability of high-temperature storage or long-term cycling.

## Description

### TECHNICAL FIELD

The present invention relates to the technical field of battery separators, and in particular to a coated separator, a preparation method of a coated separator and a battery.

### BACKGROUND

A separator is one of the core components of lithium batteries. Its performance has a very important impact on the overall performance of lithium batteries and is one of the key technologies restricting the development of lithium batteries. As the application field of lithium batteries continues to expand and the impact of lithium battery products in people's lives continues to deepen, people's demands for the performance of lithium batteries is also getting higher and higher. In order to meet the development requirements of lithium batteries, separator, as an important component of lithium batteries, should have good chemical stability and low manufacturing costs, besides, it is also an important trend to improve the safety performance of lithium batteries in the current development of lithium batteries.

In the related art, the coated separator may include a base film and a coating layer coated on at least one surface of the base film, and a ceramic layer can be coated on a surface of the coated separator to improve the heat resistance of the separator. However, the two-phase interface between the ceramic layer and the separator is in a weak bonding, which easily appears separation at a high temperature, causing the ceramic layer to peel off, the separator matrix to melt, and the heat resistance to decrease; in addition, the surface ceramic layer increases the lithium ion transmission distance, thereby reducing the lithium ion conductivity, and enabling large pores not to retain liquid electrolyte well.

### SUMMARY

The invention provides a coated separator, a preparation method of the coated separator and a battery, so as to improve the performance of the separator.

According to a first aspect of the present invention, a coated separator is provided, including: a base film and a coating layer structure provided on at least one surface of the base film; where, the coating layer structure at least includes a first coating layer and a second coating layer; the first coating layer is provided on a surface of the base film, and the second coating layer is provided on a side of the first coating layer away from the base film; the first coating layer contains a first nanofiber material and first ceramic particles, and the second coating contains a second nanofiber material and second ceramic particles;
the first nanofiber material includes several first nanofibers, and the second nanofiber material includes several second nanofibers;
a length difference between the several first nanofibers is not greater than 500nm, a length difference between the several second nanofibers is not greater than 200nm, a length of the first nanofiber is greater than a length of the second nanofiber, and an average particle diameter of the first ceramic particles is more than an average particle diameter of the second ceramic particles.

Optionally, the length of the first nanofiber is 500-1000nm; and the average particle diameter of the first ceramic particles is 100-600nm.

Optionally, a mass ratio of the first nanofiber material to the first ceramic particles is 5:1-1:5.

Optionally, the length of the second nanofiber is 100-300nm; and the average particle diameter of the second ceramic particles is 10-60nm.

Optionally, a mass ratio of the second nanofiber material to the second ceramic particles is 5:1-1:5.

Optionally, a diameter of the first nanofiber is 5-50nm, and a diameter of the second nanofiber is 5-50nm.

Optionally, a thickness ratio of the first coating layer to the second coating layer is greater than 2.

Optionally, at least one additional coating layer is included between the first coating layer and the second coating layer.

Optionally, a surface of the second ceramic particle is grafted with a fast lithium-ion conductor functional group;
further, the fast lithium-ion conductor functional group includes any one of hydroxyl (-OH), carbonyl (-C=O), fluorine (-F), and carboxyl (-COOH).

Optionally, the first ceramic particle and/or the second ceramic particle is an inorganic substance having a melting point 200°C or more, having electrical insulation, and being electrochemically stable within a range of use of a lithium battery.

Optionally, the coated separator at least satisfies any one of the following conditions:
a) ion conductivity ≥ 1.2mS/cm;
b) capacity retention rate ≥ 98%;
c) thermal contraction at 180°C/h ≤ 5%.

According to a second aspect of the present invention, a preparation method of a coated separator is provided for preparing the coated separator according to the first aspect and the alternatives thereof. The preparation method includes:
preparation of a slurry: preparing a first slurry including the first ceramic particles and the first nanofiber material, and preparing a second slurry including the second ceramic particles and the second nanofiber material;
coating and film-forming: coating the first slurry on at least one surface of the base film to form the first coating layer, and coating the second slurry on the side of the first coating layer away from the base film to form the second coating layer;
further,
the preparing the first slurry includes dispersing the first ceramic particles in a first solvent to obtain a first ceramic dispersion liquid, dispersing the first nanofiber material in a second solvent to obtain a first nanofiber dispersion liquid, and mixing the first ceramic dispersion liquid with the first nanofiber dispersion liquid to obtain the first slurry;
the preparing the second slurry includes dispersing the second ceramic particles in a third solvent to obtain a second ceramic dispersion liquid, dispersing the second nanofiber material in a fourth solvent to obtain a second nanofiber dispersion liquid, and mixing the second ceramic dispersion liquid with the second nanofiber dispersion liquid to obtain the second slurry.

Optionally, before the preparing the slurry, the preparation method further includes:
ceramic screening: selecting the first ceramic particles and the second ceramic particles of different particle sizes, where the average particle diameter of the first ceramic particles is 100-600nm, and the average particle diameter of the second ceramic particles is 10-60nm;
further including pretreatment of ceramic: performing a grafting reaction on the second ceramic particles and a material to be grafted, so that a surface of the second ceramic particle is grafted with a fast lithium-ion conductor functional group.

Optionally, the material to be grafted includes any one of polycarbonate, polylactic acid, polyurethane, perfluoropropyl vinyl ether, and methyl ethyl propyl ketone.

According to a third aspect of the present invention, a battery is provided, including the coated separator related to the first aspect and the alternatives thereof or the coated separator prepared by the preparation method of the coated separator of the second aspect and the alternatives thereof;
further, the battery is a lithium battery.

In the coated separator, the preparation method of the coated separator and the battery provided by the present invention, various first nanofibers with similar sizes are mixed in the first coating layer, and various second nanofibers with similar sizes are mixed in the second coating layer, thereby avoiding the problem that nanofibers with similar surface energy tends to agglomerate due to a huge difference in their surface energy, which is caused by large size difference between different nanofibers, and greatly improving the uniformity of mixing between nanofibers. And setting the first coating layer as a mixture of large-size first nanofibers and large-particle-diameter first ceramic particles, a first mixed material layer with large and uniform pore size is formed; and the first mixed material layer is provided on the surface of the base film, due to its large pore size and strong skeleton construction, it can enable the coated separator to maintain high heat resistance and high permeability; and by setting the second coating layer as a mixture of small-size second nanofibers and small-particle-diameter second ceramic particles, a second mixed material layer with small and uniform pore size is formed. Due to capillary action, the small pore size has a strong adsorption capacity for the electrolyte, thereby improving the transmission capacity of lithium ions, reducing the possibility of occurrence of lithium dendrite, and lowering the risk of electrochemical stability caused by high-temperature storage or long-term cycling.

### BRIEF DESCRIPTION OF DRAWINGS

In order to more clearly illustrate the technical solutions in the embodiments of the present invention or the prior art, the following will briefly introduce the drawings that need to be used in the description of the embodiments or the prior art. Obviously, the accompanying drawings in the following description are only some embodiments of the present invention. For those skilled in the art, other drawings can also be obtained according to these drawings without any creative effort.
FIG. 1 is a schematic diagram of a partial configuration of a coated separator in an embodiment of the present invention.
FIG. 2 is a schematic flow chart of a preparation method of a coated separator in an embodiment of the present invention.

### Description of reference numbers:

10-base film; 20-first coating layer; 21-first nanofiber; 22-first ceramic particle; 30-second coating layer; 31-second nanofiber; 32-second ceramic particle.

### DESCRIPTION OF EMBODIMENTS

The technical solutions in the embodiments of the present invention will be clearly and completely described below with reference to the accompanying drawings in the embodiments of the present invention. Obviously, the described embodiments are only some of the embodiments of the present invention, rather than all the embodiments. Based on the embodiments of the present invention, all other embodiments obtained by those skilled in the art without making creative efforts belong to the protection scope of the present invention.

In the description of the present invention, it should be understood that the orientation or positional relationship indicated by the terms "upper portion", "lower portion", "upper end", "lower end", "lower surface", "upper surface" and the like, which is based on the accompanying drawings, is only used to facilitate the description of the present invention and simplify the description, instead of indicating or implying that the device or element referred to must have a specific orientation or be constructed and operated in a specific orientation, and therefore cannot be understood as limiting the scope of the present invention.

In the description of the present invention, the terms "first" and "second" are only used for descriptive purposes and cannot be understood as indicating or implying relative importance or implicitly indicating the number of indicated technical features. Therefore, a feature defined by "first" or "second" may explicitly or implicitly include one or more such features.

In the description of the present invention, "plurality" means a plurality, such as two, three, four, etc., unless otherwise clearly and specifically limited.

In the description of the present invention, unless otherwise clearly stated and limited, the terms "connection" and the like should be understood in a broad sense. For example, it may be a fixed connection, a detachable connection, or an integrated connection; it may be a mechanical connection, an electrical connection or in communication with each other; it may be a direct connection, or an indirect connection through an intermediate medium; it may be an internal connection of two components or an interaction relationship between two components. For those of ordinary skill in the art, the specific meanings of the above terms in the present invention can be understood according to specific circumstances.

The technical solution of the present invention will be described in detail below with specific embodiments. The following specific embodiments can be combined with each other, and the same or similar concepts or processes may not be repeated again in some embodiments.

Before proposing this application, the applicant conducted a series of research and experiments on existing separators.

Where, in order to solve the problem that the ceramic layer is easy to be peeled off, it is proposed in the art that one-dimensional nanomaterials may be added to the coating layer.

In order to solve the problem that the haphazard stacking of one-dimensional nanomaterials in the coating layer, which is prone to too many voids and few contact points, the applicant proposed a corresponding solution. By making a length of the one-dimensional nanomaterial decreases gradually along the coating layer (reflected as the decrement of a length description value of one-dimensional nanomaterial in respective material layer), the voids caused by stacking of long nanomaterials are large, and the voids are larger at the bottom layer. The shorter nanomaterials at an upper layer can to a certain extent fill these voids. After layer-by-layer deposition, there are no too many voids inside the coating layer, and there are more contact points. When heated, a compact structure of the coating layer can inhibit the thermal deformation of the separator, thereby improving the heat resistance of the coated separator. For this solution, the applicant also proposed a patent application (application number: PCT/CN2022/077087, application date: February 21, 2022); and the present application introduces the entire content of PCT/CN2022/077087, that is, the entire content of PCT/CN2022/077087 can be used as support for the present application.

In order to solve the problem that the layer-by-layer decreasing stacking of one-dimensional nanofibers causes too large stacking density of one-dimensional nanofibers, which hinders the transmission channel of lithium ions, affects the transmission rate of lithium ions, and limits the performance of the separator, the applicant has proposed a corresponding solution, which can effectively increase the ion conduction rate by introducing ceramic particles into the one-dimensional nanomaterial coating. For this solution, the applicant also proposed a patent application (application number: PCT/CN2022/108551, application date: July 28, 2022); and the present application introduces the entire content of PCT/CN2022/108551 herein, that is, the entire content of PCT/CN2022/108551 can be used as support for the present application.

However, the applicant found in further research that although ceramic particles can be used in the above solutions to avoid an excessive stacking density of one-dimensional nanomaterials, thereby forming a more effective lithium ion transmission channel and improving the lithium ion transmission rate. However, the overall performance of the separator is still unsatisfactory. Through research and experiments, the applicant found that the reason is that a size difference between different nanofibers is too large, resulting in a large difference in their surface energy, which causes nanofibers with similar surface energy to agglomerate easily. That is, a small-size nanofiber has a large surface energy and is easy to gather with each other to form an agglomerate, which then mixes in contact with a large-size nanofiber. As a result, the small-size nanofiber cannot fully exert its expected performance; and the ceramic particles are not differentiated accordingly for nanofibers of different sizes, which limits the performance of the separator.

Based on this discovery, and through a series of research, tests and verifications, the applicant obtained the technical solutions of the present application. Since an ordered arrangement of one-dimensional nanofibers is a major initiative of the applicant, the problems for further research and the obtained solutions based on the ordered arrangement are also a major initiative, and the entire research process should be regarded as an inseparable part of this solution, and considered as a whole when evaluating the creativity of the present application.

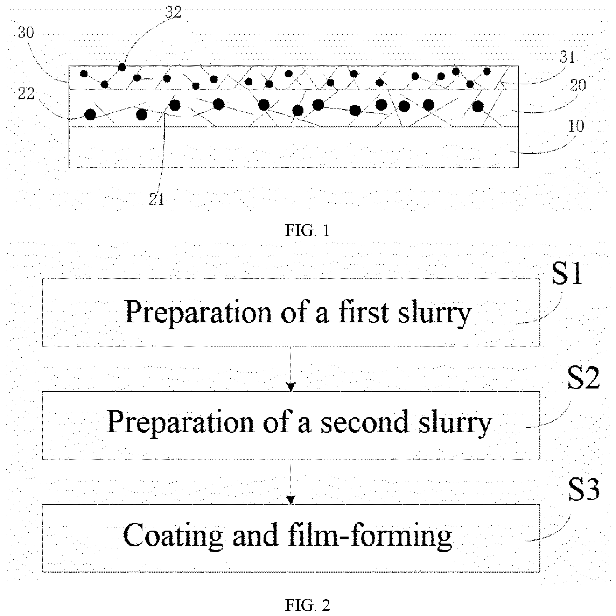

Please refer to FIG. 1, an embodiment of the present invention provides a coated separator, including: a base film 10 and a coating layer structure disposed on the base film 10. The coating layer structure includes a first coating layer 20 and a second coating layer 30, where the first coating layer 20 is disposed on a surface of the base film 10, and the second coating layer 30 is disposed on a side of the first coating layer 20 away from the base film 10. The first coating layer 20 contains a first nanofiber material and first ceramic particles 22, and the second coating layer 30 contains a second nanofiber material and second ceramic particles 32. The first nanofiber material includes several first nanofibers 21, and the second nanofiber material includes several second nanofibers 31; a length difference between respective first nanofibers 21 is not greater than 500nm, a length difference between respective second nanofibers 31 is not greater than 200nm, and a length of the first nanofiber 21 is greater than that of the second nanofiber 31. An average particle diameter of the first ceramic particles 22 is larger than that of the second ceramic particles 32.

The embodiments of the present invention take into consideration that a large size difference between different nanofibers will result in a large difference in a surface energy thereof, which will cause nanofibers with similar surface energy to easily gather. That is, a small-size nanofiber has a large surface energy and is easy to gather with each other to form an agglomerate, which then mixes in contact with a large-size nanofiber. As a result, the small-size nanofibers cannot fully exert their expected performance. By mixing nanofibers with similar sizes, a mixing uniformity will be greatly improved, thereby reducing difference . Moreover, by setting the first coating layer to be a mixture of large-size first nanofibers and large-particle-diameter first ceramic particles, a first mixed material layer with large and uniform pore size is formed. The first mixed material layer is provided on the surface of the base film, and due to a large pore size and a strong skeleton construction thereof, a high heat resistance and a high permeability of the coated separator can be maintained; by setting the second coating layer to be a mixture of small-size second nanofibers and small-particle-diameter second ceramic particles, a second mixed material layer with small and uniform pore size is formed. Due to the capillary action, the small pore size has a strong adsorption capacity for the electrolyte, thereby improving the transmission capacity of lithium ions, reducing the possibility of occurrence of lithium dendrite, and reducing the risk of electrochemical stability caused by high-temperature storage or long-term cycling, which effectively improves the performance of the separator.

As a preferred embodiment, the length of the first nanofiber 21 is in a range of 500-1000nm, such as 500nm, 600nm, 700nm, 800nm, 900nm, 1000nm, etc.; the average particle diameter of the first ceramic particles 22 is in a range of 100-600nm, such as 100nm, 200nm, 300nm, 400nm, 500nm, 600nm, etc. The first coating layer containing the first nanofiber and the first ceramic particle is provided on the surface of the base film to form a large-pore size and a strong skeleton structure, which can maintain a high heat resistance and a high permeability of the coated separator.

As a preferred embodiment, a mass ratio of the first nanofiber material to the first ceramic particles 22 is 5:1-1:5. By setting the mass ratio of the first nanofiber material to the first ceramic particles 22 to be within this range, the coating layer can be kept to have better heat resistance and lithium ion conductivity. As a specific embodiment, the mass ratio of the first nanofiber material to the first ceramic particles 22 can be, for example, any one of 5:1, 4:1, 3:1, 2:1, 1:1, 1:2, 1:3, 1:4, and 1:5, or a range between any two of them. Of course, the mass ratio of the first nanomaterial to the first ceramic particles may also adopt other values, and the specific value is not limited in the present invention. As long as the mass ratio is within 5:1-1:5, it falls into the protection scope of the present invention.

As a preferred embodiment, the length of the second nanofiber 31 is in a range of 100-300nm, for example, it may be 100nm, 150nm, 200nm, 250nm, 300nm, etc.; and the average particle diameter of the second ceramic particles 32 is in a range of 10-60nm, for example, it may be 10nm, 20nm, 30nm, 40nm, 50nm, 60nm, etc. The second coating layer is arranged on a side of the first coating layer away from the base film, and is a mixture of the second nanofibers and the second ceramic particles. Due to the capillary action, the small pore size has a strong adsorption capacity for the electrolyte, thereby improving the transmission capacity of lithium ions, further reducing the possibility of lithium dendrite, and lowering the risk of electrochemical stability caused by high-temperature storage or long-term cycling.

As a preferred embodiment, a mass ratio of the second nanofiber material to the second ceramic particles 32 is 5:1-1:5. By setting the mass ratio of the second nanofiber material to the second ceramic particles 32 to be within this range, the coating layer can have a better battery capacity retention rate and a lithium ion conductivity. As a specific embodiment, the mass ratio of the second nanofiber material to the second ceramic particles 22 can be, for example, any one of 5:1, 4:1, 3:1, 2:1, 1:1, 1:2, 1:3, 1:4, and 1:5, or a range between any two of them. Of course, the mass ratio of the second nanomaterial to the second ceramic particles can also adopt other values. The specific value is not limited in the present invention. As long as the mass ratio is within 5: 1-1:5, it falls into the protection scope of the present invention.

As a preferred embodiment, a diameter of the first nanofiber is in a range of 5-50nm, and a diameter of the second nanofiber is in a range of 5-50nm.

As a preferred embodiment, a thickness ratio of the first coating layer 20 to the second coating layer 30 is greater than 2; thus, the heat resistance of the coated separator can be further effectively improved.

As a preferred embodiment, at least one additional coating layer is further included between the first coating layer 20 and the second coating layer 30. For example, one additional coating layer can be included between the first coating layer 20 and the second coating layer 30, such as a third coating layer; or, two additional coating layers can be included, such as a third coating layer and a fourth coating layer. Of course, other numbers of additional coating layers may be included. The material and size of the additional coating layer may be the same as those of the first coating layer or the second coating layer, or may be different from those of the first coating layer or the second coating layer. That is, a third coating layer is provided between the first coating layer and the second coating layer. The third coating layer includes third ceramic particles with an average particle diameter of 100-600nm and a third nanofiber with a length-diameter-ratio ≤ 200, and the materials and sizes of both the third ceramic particles and the third nanofiber are different from the those of second coating layer. Alternatively, a third coating layer is provided between the first coating layer and the second coating layer, and the third coating contains third ceramic particles with an average particle diameter of 10-60nm and a third nanofiber with a length-diameter-ratio ≤ 60, and the material and size of both the third ceramic particles and the third nanofiber are different from those of the first coating layer. It should be noted that the number of coating layers of the coated separator, the selection of materials and the arrangement of sizes between different layers can be adjusted according to actual needs, which should not be understood as limitations of the present invention.

As a preferred embodiment, a surface of the second ceramic particle 32 is grafted with a fast lithium-ion conductor functional group, and the fast lithium-ion conductor functional groups that are rich on the surface of the second ceramic particle can greatly improve the lithium ion transmission capacity. Further, the fast lithium-ion conductor functional group includes any one of hydroxyl (-OH), carbonyl (-C=O), fluorine (-F), and carboxyl (-COOH).

As a preferred embodiment, the first ceramic particle 22 and/or the second ceramic particle 32 is an inorganic substance with a melting point of 200°C or above, electrical insulation, and electrochemical stability within a use range of a lithium ion battery. The examples of the inorganic substances may include: oxide-based ceramics such as alumina, silica, titanium oxide, zirconium dioxide, magnesium oxide, cerium oxide, yttria, and zinc oxide; and nitride-based ceramics such as silicon nitride, titanium nitride, and boron nitride; and ceramics such as silicon carbide, calcium carbonate, magnesium sulfate, aluminum sulfate, aluminum hydroxide oxide, potassium titanate, talc, kaolinite, clay, pearl clay, halloysite, pyrophyllite, montmorillonite, sericite, mica, amesite, bentonite, asbestos, zeolite, calcium silicate, magnesium silicate, diatomaceous earth, and silica sand, which can be used alone or in combination.

As a preferred embodiment, the coated separator meets at least any of the following conditions:
a) ion conductivity ≥1.2 mS/cm;
b) capacity retention rate ≥ 98%;
c) thermal contraction at 180°C/h ≤ 5%.

In addition, referring to FIG. 2, an embodiment of the present invention also provides a preparation method of a coated separator, which is used to prepare the coated separator involved in the first aspect and the alternatives thereof. The preparation method includes:
S1: preparation of a first slurry: preparing a first slurry including first ceramic particles and a first nanofiber material;
S2: preparation of a second slurry: preparing a second slurry including second ceramic particles and a second nanofiber material;
S3: coating and film-forming: coating the first slurry on at least one surface of the base film to form a first coating layer, and coating the second slurry on a side of the first coating layer away from the base film to form a second coating layer.

Specifically, the preparation of the first slurry includes dispersing the first ceramic particles in a first solvent to obtain a first ceramic dispersion liquid, dispersing the first nanofiber material in a second solvent to obtain a first nanofiber dispersion liquid, and mixing the first ceramic dispersion liquid with the first nanofiber dispersion liquid to obtain the first slurry;
the preparation of the second slurry includes dispersing the second ceramic particles in a third solvent to obtain a second ceramic dispersion liquid, dispersing the second nanofiber material in a fourth solvent to obtain a second nanofiber dispersion liquid, and mixing the second ceramic dispersion liquid with the second nanofiber dispersion liquid to obtain the second slurry.

Where, the first solvent, the second solvent, the third solvent, and the fourth solvent can be the same type of solvent, of course, they may also be different types, which is not limited in the present invention.

Where, an order of the preparation of the first slurry and the second slurry is not limited in the present invention. The second slurry may be prepared first, and then the first slurry may be prepared.

In an example, the first solvent and the third solvent are each selected from water, N-methylpyrrolidone, ethanol, acetone and the like. The first ceramic particles and the second ceramic particles are each uniformly dispersed in the solvent by means of high-speed stirring, high-pressure homogenization, sanding and other dispersion modes. A mass concentration of the first ceramic particles or the second ceramic particles in the dispersion liquid is in a range of 2%-40%.

In an example, the second solvent and the fourth solvent are each selected from water, N-methylpyrrolidone, ethanol, acetone and the like. The first nanofiber material and the second nanofiber material are each uniformly dispersed in the dispersant by means of high-speed stirring, high-pressure homogenization, and sand grinding and dispersion. A mass concentration of the first nanofiber or the second nanofiber in the dispersant is in a range of 2%-30%.

Where, the length of the first nanofibers may be different, as long as a length difference between them is not greater than 500nm, that is, within a proper size range. Likewise, the length of the second nanofibers may be different, as long as a length difference between them is not greater than 200nm, that is, within a proper size range.

The nanofibers of different lengths are realized based on the selection of raw materials for the nanofibers. For example, nanofibers of different lengths can be formed when selecting nanofiber materials made of different materials.

In other examples, nanofibers of different lengths can also be formed through corresponding technical means.

A raw material of the nanofiber material or a broken nanofiber material can be broken for one or more times, so as to form nanofibers of different length.

Where, based on a raw material of one length of nanofiber material, a shorter nanofiber material can be formed by breaking the nanofiber material, for example, by breaking the nanofiber material into the one having a length of half of the length of the raw material. In other examples, this can also be realized without a half-breaking approach.

Any existing means or improved means that can realize the breaking of nanofiber material can be used as a specific example of the embodiment of the present invention. In a specific example, it can be realized by etching the nanofiber material, for example, by etching the nanofiber to half of the length of the raw material.

Based on the required layering, the raw material may be broken for one or more times. For example, the nanofiber material may be etched to half of the length of the raw material first, and then a part of nanofiber materials with a half of the length can be retained, and the other part of nanofiber materials with a half of the length can be broken so as to obtain a nanofiber material with a quarter of the length. In other examples, a part of the nanofiber materials with a quarter of the length can be further broken. The number of breaking can be configured based on the demands.

Of course, it is also possible to implement at least one of the following joining processes and form nanofiber materials of different lengths by joining them for one or more times:
joining a raw material of a nanofiber material to an end of another raw material;
joining a joined nanofiber material to an end of the raw material;
joining one joined nanofiber material to an end of another joined nanofiber material.

It can be seen that an object to be joined may be one end of the raw material and one end of another raw material; or, one end of the raw material and one end of a joined nanofiber material; or, one end of the joined nanofiber material and one end of another joined nanofiber material.

Where, through the joining of nanofiber materials, a longer nanofiber material can be formed based on a raw material of one length of nanofiber material. For example, two raw materials can be joined to form a nanofiber material with twice the length. In others examples, raw materials (or joined nanofiber materials) of different lengths can also be used.

Any existing means or improved means that can realize the joining of nanofiber materials can be used as a specific example of the embodiment of the present invention.

For example, the joining of nanofiber materials can be achieved based on the materials rich in a hydroxyl functional group (such as polyethylene glycol, PEG). Thus, the above-mentioned joining may include:
mixing a nanofiber material to be joined with the material rich in a hydroxyl functional group (e.g., PEG) in a solution;
adding molecular sieve particles as a catalyst to the solution;
heating the solution, then cooling down, and filtering to remove the molecular sieve particles, so as to obtain a joined nanofiber material.

As a specific example, nanocellulose is taken as an example. A hydroxyl content of an end portion of nanocellulose is significantly higher than that of a middle region of nanocellulose. In order to increase a length of nanocellulose, the activity of hydroxyl group can be fully utilized as follows:
(1) mixing nanocellulose and polyethylene glycol (PEG), where a molecular weight of PEG is 50000-1000000g/mol and PEG accounts for 1% of nanocellulose, and stirring the two components thoroughly to form a corresponding solution;
(2) adding 13A molecular sieve particles to the above solution, where a size of the molecular sieve particle is 1mm-10mm, and the molecular sieve serves as a catalyst;
(3) heating in water bath to 80 degrees for 1-2 hours;
(4) cooling to a normal temperature, filtering to remove the 13A molecular sieve particles, so as to obtain the joined nanocellulose.

In the above solutions, by adding the materials rich in hydroxyl functional group (such as PEG), it is possible to form a bridged connection between the nanocellulose mateirals; and using the molecular sieve (such as 13A molecular sieve) as a catalyst, the polymerization reaction between PEG and nanocellulose can be accelerated, so as to finally form a structure of nanocellulose-PEG-nanocellulose. Based on the required layering, it is possible to realize the joining of the raw materials for one or more times. For example, the raw material of a nanofiber material may be joined each other to obtain a nanofiber material with twice the length of the raw material first, a part of the nanofiber material with twice the length can be retained, and then another part of the nanofiber material with twice the length can be joined to the raw material or the nanofiber material with twice the length to obtain a nanofiber material with three times the length or four times the length. In other examples, further joining can be carried out, and the number of joining can be arbitrarily configured according to requirements.

Where, mixing the first ceramic dispersion liquid and the first nanofiber dispersion liquid to obtain the first slurry and mixing the second ceramic dispersion liquid and the second nanofiber dispersion liquid to obtain the second slurry specifically include: mixing the first ceramic dispersion liquid and the first nanofiber dispersion liquid to obtain a first mixed solution, mixing the second ceramic dispersion liquid and the second nanofiber dispersion liquid to obtain a second mixed solution, respectively, where the mixing is performed by means of high-speed stirring, high-pressure homogenization, sanding and dispersion, etc.. Next, an adhesive is added into the first mixed solution and the second mixed solution respectively to obtain the first slurry and the second slurry; where, the adhesive is at least one of polyvinyl alcohol, polyacrylonitrile, polyacrylic acid, styrene-butadiene rubber, carboxymethylcellulose, polyvinylidene fluoride, polyvinylpyrrolidone and polyimide; where, the adhesive accounts for 1%-10% of a solid mass in the first mixed solution and the second mixed solution respectively.

In an example, the coating and film-forming is as follows: coating the first slurry prepared above on the base film, and then drying to obtain the first coating layer; then, coating the second slurry on the first coating layer and drying to obtain the coated separator. The coating methods are spray coating, dip coating, micro-gravure roller coating, printing coating, extrusion coating, and wire rod coating. The base film is, for example, a polyolefin base film with a thickness of 3-30µm, a drying temperature of 40-130 degrees, and a coating speed of 10-200m/min.

Of course, it should be realized that drying is only one way for the first and/or second slurry to form the first and/or second coating layer. The first and/or second slurry may also form the first and/or second coating layer through phase transformation. The present invention makes no corresponding limitation on how the first and/or second slurry forms the first and/or second coating layer.

Where, as a preferred way, before the dispersion of ceramics, ceramic screening and pretreatment of ceramic are also included. The details are as flows.

Specifically, ceramic screening includes selecting the first ceramic particle and the second ceramic particle of different particle sizes, where the average particle diameter of the first ceramic particles is in a range of 100-600nm, and the average particle diameter of the second ceramic particles is in a range of 10-60nm.

Specifically, pretreatment of ceramic includes adding the second ceramic particles into a reaction kettle, adding a material to be grafted to perform a grafting reaction, and grafting a fast lithium-ion conductor functional group on a surface of the second ceramic particle. Specifically, the second ceramic particles are added to a solvent, and then the mixture are put into the reaction kettle together, followed by adding the material to be grafted; under a certain reaction temperature and a certain reaction pressure, and after a certain reaction time, the fast lithium-ion conductor functional group can be grafted on the second ceramic particles.

The second ceramic particle is not particularly limited, but preferably has a melting point equal to or higher than 200°C and a high electrical insulation property, and is electrochemically stable within a range of use of lithium batteries. Examples may be given as follows: oxide-based ceramics such as alumina, silica, titanium oxide, zirconium dioxide, magnesium oxide, cerium oxide, yttria, and zinc oxide; and nitride-based ceramics such as silicon nitride, titanium nitride, and boron nitride; ceramics such as silicon carbide, calcium carbonate, magnesium sulfate, aluminum sulfate, aluminum hydroxide oxide, potassium titanate, talc, kaolinite, clay, pearl clay, halloysite, pyrophyllite, montmorillonite, sericite, mica, amesite, bentonite, asbestos, zeolite, calcium silicate, magnesium silicate, diatomaceous earth, and silica sand, which can be used alone or in combination.

The first ceramic particle is not particularly limited, but preferably has a melting point equal to or higher than 200°C and a high electrical insulation property, and is electrochemically stable within a range of use of lithium batteries, and can be selected from inorganic materials that are the same as or different from the second ceramic particles. The solvent is water, ethanol, acetone, NMP, etc., and the material to be grafted is polycarbonate, polylactic acid, polyurethane, perfluoropropyl vinyl ether, methyl ethyl propyl ketone, etc. The reaction temperature is 100-200°C, the reaction pressure is 0.1-0.5Mpa, and the reaction time is 10-50min. After the reaction is finished, the liquid solvent is removed to leave a solid, and the second ceramic particles grafted with a fast lithium-ion conductor can be obtained.

On this basis, the dispersion of ceramics specifically includes:
dispersing the first ceramic particles and the pretreated second ceramic particles in the first solvent and the third solvent to obtain the first ceramic dispersion liquid and the second ceramic dispersion liquid, respectively.

Further, an embodiment of the present invention also provides a battery, including the coated separator related to the first aspect of the present invention and the alternatives thereof, or the coated separator prepared by the solution of the second aspect of the present invention and the alternatives thereof. Where, the battery is, for example, a lithium battery.

The product performance of some embodiments of the present invention will be analyzed through experiments below.

### Embodiment 1

In the present embodiment, the coated separator is prepared through the following steps:
ceramic screening: selecting first ceramic particles and second ceramic particles of different particle sizes, where, an average particle diameter of the first ceramic particles is 300nm, and an average particle diameter of the second ceramic particles is 40nm; and the first ceramic particles and the second ceramic are both alumina;
dispersion of ceramics: dispersing the first ceramic particles and the second ceramic particles evenly in N-methylpyrrolidone through a high-speed stirring to obtain a first ceramic dispersion liquid and a second ceramic dispersion liquid respectively, where a mass concentration of the first ceramic particles in the first ceramic dispersion liquid and a mass concentration of the second ceramic particles in the second ceramic dispersion liquid are both 20%;
dispersion of nanomaterial: dispersing first nanofibers and second nanofibers of different lengths in N-methylpyrrolidone, respectively, to obtain a first nanofiber dispersion liquid and a second nanofiber dispersion liquid, where, a length of the first nanofiber L50 is 600nm, a length of the second nanofiber L50 is 300nm, the dispersion method is high-speed stirring, and the mass concentrations of the first nanofibers and the second nanofibers in the dispersant are both 15%;
mixing to prepare a slurry: mixing the first ceramic dispersion liquid and the first nanofiber dispersion liquid to obtain a first mixed solution; mixing the second ceramic dispersion liquid and the second nanofiber dispersion liquid to obtain a second mixed solution; where, the mixing method adopts high-speed stirring; then adding an adhesive to the first mixed solution and the second mixed solution respectively to obtain the first slurry and the second slurry; the adhesive is polyvinyl alcohol; the adhesive accounts for 8% of a solid mass in the first mixed solution and the second mixed solution, respectively; a mass ratio of the first nanofiber to the first ceramic particles is 1:1, and a mass ratio of the second nanofiber to the second ceramic particles is 1: 1;
coating and film-forming: coating the first slurry on one surface of the base film by coating and drying it to form the first coating layer on the surface of the base film, so as to obtain a semi-finished coated separator; coating the second slurry on the first coating layer and drying it to obtain the second coating layer on the surface of the first coating layer, thereby obtaining a coated separator; where, the base film is a polyethylene base film with a thickness of 9µm, a drying temperature of 100 degrees, and a coating speed of 100m/min. The resulting first coating layer has a thickness of 0.8µm and the resulting second coating layer has a thickness of 0.3µm.

Where, the first nanofiber and the second nanofiber are specifically one-dimensional nanofibers, which are deposited on the surface of the base film to form a layered structure (that is, layered nanomaterials of different lengths). During the deposition process on the base film, due to the surface energy, the longest one-dimensional nanomaterial (which has the largest surface energy, is the most unstable, and is most likely to adhere upon contact with an interface with a small surface energy) is deposited first, while the longer one is deposited later, and the shortest nanowire is finally deposited, forming a layered structure that gradually stacks from long to short. By mixing nanofibers with similar sizes, the mixing uniformity will be greatly improved and the differences will be reduced.

Embodiments 2-12 and Comparative Embodiments 1-5 are also obtained, utilizing the same method. Where, referring to Table 1, the performance of the corresponding separators in Embodiments 1-12 and Comparative Embodiments 1-5 are illustrated; except for the difference in preparation parameters listed in Table 1, all Embodiments and Comparative Embodiments are consistent with Embodiment 1 in other aspects, which will not be repeated again.

Where, Embodiment 12 shown in Table 1 only differs from Embodiment 1 in that the second ceramic particles are subjected to a pretreatment step for ceramic before the step S2 ceramic dispersion, the pretreatment step including: adding the second ceramic particles to a solvent, and then putting them together in a reaction kettle, adding a material to be grafted, maintaining a certain reaction temperature, reaction pressure, and reaction time, and grafting fast lithium-ion conductor functional groups to the second ceramic particles. Where, the solvent is acetone and the material to be grafted is polycarbonate; the reaction temperature is 150°C, the reaction pressure is 0.3Mpa, and the reaction time is 20min. After the reaction is finished, the liquid solvent is removed to leave a solid, thereby obtaining the second ceramic particles grafted with the fast lithium ion conductors.

**Table 1**

| Serial num ber | Layering condition | Nanofiber length L50 (nm) | Average particle diameter of ceramics (nm) | Nanofiber : ceramic | Thickness (µm) | Thickness ratio | Lithium ion conductivity (mS/cm) | Batte ry capac ity retent ion rate at 60 degre es for 30 days stora ge (%) | Thermal contraction (180 °C/h) |
|---|---|---|---|---|---|---|---|---|---|
| Emb odim ent 1 | First coating layer | 600 | 300 | 1:1 | 0.8 | 2.67 | 1.7 | 99 | 2.1 |
| | Second coating layer | 300 | 40 | 1:1 | 0.3 | | | | |
| Emb odim ent 2 | First coating layer | 600 | 300 | 1:1 | 0.6 | 1.20 | 1.8 | 99.4 | 4 |
| | Second coating layer | 300 | 40 | 1:1 | 0.5 | | | | |
| Emb odim ent 3 | First coating layer | 600 | 300 | 1:1 | 1 | 5.00 | 1.5 | 98 | 1.5 |
| | Second coating layer | 600 | 40 | 1:1 | 0.2 | | | | |
| Emb odim ent 4 | First coating layer | 500 | 100 | 1:1 | 0.8 | 2.67 | 1.8 | 99.3 | 1.5 |
| | Second coating layer | 300 | 40 | 1:1 | 0.3 | | | | |
| Emb odim ent 5 | First coating layer | 600 | 300 | 1:1 | 0.8 | 2.67 | 1.4 | 99 | 1.2 |
| | Second coating layer | 300 | 10 | 1:1 | 0.3 | | | | |
| Emb odim ent 6 | First coating layer | 1000 | 600 | 1:1 | 0.8 | 2.67 | 1.85 | 99.4 | 2.5 |
| | Second coating layer | 300 | 40 | 1:1 | 0.3 | | | | |
| Emb odim ent 7 | First coating layer | 600 | 300 | 1:1 | 0.8 | 2.67 | 1.2 | 99.3 | 1.5 |
| | Second coating layer | 100 | 40 | 1:1 | 0.3 | | | | |
| Emb odim ent 8 | First coating layer | 600 | 300 | 1:5 | 0.8 | 2.67 | 1.8 | 98 | 2.5 |
| | Second coating layer | 300 | 40 | 1:1 | 0.3 | | | | |
| Emb odim ent 9 | First coating layer | 600 | 300 | 5:1 | 0.8 | 2.67 | 1.3 | 99.5 | 1 |
| | Second coating layer | 300 | 40 | 1:1 | 0.3 | | | | |
| Emb odim ent 10 | First coating layer | 600 | 300 | 1:1 | 0.8 | 2.67 | 1.4 | 99 | 1.5 |
| | Second coating layer | 300 | 40 | 1:5 | 0.3 | | | | |
| Emb odim ent 11 | First coating layer | 600 | 300 | 1:1 | 0.8 | 2.67 | 1.2 | 99.2 | 1.5 |
| | Second coating layer | 300 | 40 | 5:1 | 0.3 | | | | |
| Emb odim ent 12 | First coating layer | 600 | 300 | 1:1 | 0.8 | 2.67 | 2.1 | 99.6 | 1.5 |
| | Second coating | 300 | 40 (ceramic | 1:1 | 0.3 | | | | |
| | layer | | lithiation-graftin g) | | | | | | |
| Com parat ive Emb odim ent 1 | Fibers and ceramics mixed in disorder without delaminati on | 600 | 300 | 1:1 | 1.1 | / | 1.4 | 95 | 1.8 |
| | | 300 | 40 | | | | | | |
| Com parat ive Emb odim ent 2 | First coating layer | 600 | 650 | 1:1 | 0.8 | 2.67 | 1.4 | 97 | 15 |
| | Second coating layer | 300 | 40 | 1:1 | 0.3 | | | | |
| Com parat ive Emb odim ent 3 | First coating layer | 600 | 600 | 1:1 | 0.8 | 2.67 | 1.5 | 96 | 2.5 |
| | Second coating layer | 300 | 70 | 1:1 | 0.3 | | | | |
| Com parat ive Emb odim ent 4 | First coating layer | 1500 | 300 | 1:1 | 0.8 | 2.67 | 1.5 | 99 | 25 |
| | Second coating layer | 80 | 40 | 1:1 | 0.3 | | | | |
| Com parat ive Emb odim ent 5 | First coating layer | 300 | 300 | 1:1 | 0.8 | 2.67 | 1.1 | 91 | 7 |
| | Second coating layer | 600 | 40 | 1:1 | 0.3 | | | | |

From Table 1, according to the comparison of Embodiments 1-12, it can be seen that, when the first nanofibers are mixed with the first ceramic particles and the second nanofibers are mixed with the second ceramic particles, the thermal contraction at 180°C is less than 5%, and the lithium ion conductivity is greater than 1.2mS/cm, the 30-day battery capacity retention rate is greater than 98%. When the thickness of the first coating layer is lowered and the thickness of the second coating layer is increased, the heat resistance is decreased (Embodiments 1, 2, 3), which is mainly because the first nanofibers and the first ceramic particles act as the main skeleton and are in direct contact with the base film, so that the first coating layer composed of the first nanofibers and the first ceramic particles directly improves the heat resistance. If the thickness of the first coating layer is lowered, the decrease in heat resistance will be directly reflected. The second coating layer composed of the second nanofibers and the second ceramic particles is in direct contact with the electrode plate, and its uniformity directly determines the battery capacity retention rate. The higher the uniformity, the higher the battery capacity retention rate; and thickness of the second coating layer can greatly improve the uniformity of the entire coating layer structure. Accordingly, as the thickness of the second coating layer increases, the battery retention rate increases (Embodiments 1, 2, 3).

From the comparison of Embodiment 1, Embodiment 5, and Comparative Embodiment 3, it can be seen that when the particle diameter of the second ceramic particles in the second coating layer is too large, the battery capacity retention rate at high-temperature storage decreases (Comparative Embodiment 3); when the particle diameter of the second ceramic particles in the second coating layer decreases, the lithium ion conductivity decreases (Embodiment 1, Embodiment 5). From the comparison of Embodiment 1 and Embodiment 7, it can be seen that when the length of the second nanofiber in the second coating layer decreases, the lithium ion conductivity decreases. The reason for this phenomenon is that the length of the second nanofiber increases, causing that the disorder degree of aperture distribution in the second coating layer increases, which in turn leads to a decrease in battery capacity retention rate; and the length of the second nanofibers decreases, resulting in narrower aperture, which in turn leads to smaller lithium ion transmission channels. However, the lithium ion conductivity can be further enhanced by grafting fast lithium-ion conductor functional groups on the second ceramic, as shown in Embodiment 12.

From the comparison of Embodiment 1, Comparative Embodiment 2, and Comparative Embodiment 4, it can be seen that when the particle diameter of first ceramic particles in the first coating layer increases, the heat resistance of the separator decreases; when the length of the first nanofiber in the first coating layer increases, the heat resistance of the separator also decreases. The main reason for this phenomenon is that when the size increases too much, the gaps between the coating layer materials increase, which in turn leads to their limited contact points with the base film. This shows that when the separator is heated, its shrinkage cannot be effectively inhibited.

From the comparison of Embodiment 1, Comparative Embodiment 1, and Comparative Embodiment 5, it can be seen that when nanofibers and ceramic particles are distributed in disorder, the battery capacity retention rate at the high-temperature storage is only 95%, which is far lower than the result of layering. And when the first nanofibers are mixed with the second ceramic particles and the second nanofibers are mixed with the first ceramic particles, the lithium ion conductivity, the battery capacity retention rate at high-temperature storage, and the heat resistance are further reduced. The reason for this phenomenon is that when the nanofibers and ceramics are distributed disorderly, the aperture uniformity of the coating layer is poor, and the aperture size is uneven, which in turn leads to a decrease in the battery capacity retention rate at the high-temperature storage. When the first coating layer is the second nanofibers and the second coating layer is the first nanofibers, due to the increase in the size difference between the nanofiber and the ceramic, the mixing consistency is reduced. In addition, the introduction of the second nanofibers into the second coating layer greatly increases the aperture and its inconsistency, which brings about a significant drop in the battery capacity retention rate at the high-temperature storage. The introduction of the first nanofibers into the first coating layer reduces the rigidity of the skeleton, resulting in a decrease in high temperature heat resistance.

In the description of this specification, the description of referring to "an implementation mode", "an embodiment", "specific implementation process", "an example", etc. means that the specific features, structures, materials, or characteristics described in conjunction with the embodiment or example, are included in at least one embodiment or example of the invention. In this specification, schematic representations of the above terms do not necessarily refer to the same embodiment or example. Furthermore, the specific features, structures, materials or characteristics described can be combined in any suitable manner in any one or more embodiments or examples.

Finally, it should be noted that the above embodiments are only used to illustrate the technical solution of the present invention, but not to limit it. Although the present invention has been described in detail with reference to the foregoing embodiments, those skilled in the art should understand that: the technical solutions described in the foregoing embodiments can still be modified, or some or all of the technical features can be equivalently replaced; and these modifications or replacements do not make the essence of the corresponding technical solutions deviate from the scope of technical solutions of the embodiments of the present invention.

## Claims

1. A coated separator, comprising: a base film and a coating layer structure provided on at least one surface of the base film, the coating layer structure at least comprising a first coating layer and a second coating layer; wherein, the first coating layer is disposed on a surface of the base film, and the second coating layer is disposed on a side of the first coating layer away from the base film; the first coating layer contains a first nanofiber material and first ceramic particles, and the second coating layer contains a second nanofiber material and second ceramic particles;
the first nanofiber material comprises several first nanofibers, and the second nanofiber material comprises several second nanofibers;
a length difference between the several first nanofibers is not greater than 500nm, a length difference between the several second nanofibers is not greater than 200nm, a length of the first nanofiber is greater than a length of the second nanofiber, and an average particle diameter of the first ceramic particles is more than an average particle diameter of the second ceramic particles.

2. The coated separator according to claim 1, wherein the length of the first nanofiber is 500-1000nm; and the average particle diameter of the first ceramic particles is 100-600nm.

3. The coated separator according to claim 2, wherein a mass ratio of the first nanofiber material to the first ceramic particles is 5:1-1:5.

4. The coated separator according to claim 1, wherein the length of the second nanofiber is 100-300nm; and the average particle diameter of the second ceramic particles is 10-60nm.

5. The coated separator according to claim 4, wherein a mass ratio of the second nanofiber material to the second ceramic particles is 5:1-1:5.

6. The coated separator according to claim 1, wherein a diameter of the first nanofiber is 5-50nm, and a diameter of the second nanofiber is 5-50nm.

7. The coated separator according to claim 1, wherein a thickness ratio of the first coating layer to the second coating layer is greater than 2.

8. The coated separator according to any one of claims 1 to 7, further comprising at least one additional coating layer between the first coating layer and the second coating layer.

9. The coated separator according to claims 1 to 7, wherein a surface of the second ceramic particle is grafted with a fast lithium-ion conductor functional group;
further, the fast lithium-ion conductor functional group comprises any one of hydroxyl (-OH), carbonyl (-C=O), fluorine (-F), and carboxyl (-COOH).

10. The coated separator according to claims 1 to 7, wherein the first ceramic particle and/or the second ceramic particle is an inorganic substance having a melting point 200°C or more, having electrical insulation, and being electrochemically stable within a range of use of a lithium battery.

11. The coated separator according to claim 1, wherein the coated separator at least satisfies any one of the following conditions:
a) ion conductivity ≥ 1.2mS/cm;
b) capacity retention rate ≥ 98%;
c) thermal contraction at 180°C/h ≤ 5%.

12. A preparation method of a coated separator, wherein the preparation method is configured to prepare the coated separator according to any one of claims 1 to 11, comprising:
preparation of a slurry: preparing a first slurry comprising the first ceramic particles and the first nanofiber material, and preparing a second slurry comprising the second ceramic particles and the second nanofiber material;
coating and film-forming: coating the first slurry on at least one surface of the base film to form the first coating layer, and coating the second slurry on the side of the first coating layer away from the base film to form the second coating layer;
further,
the preparing the first slurry comprises dispersing the first ceramic particles in a first solvent to obtain a first ceramic dispersion liquid, dispersing the first nanofiber material in a second solvent to obtain a first nanofiber dispersion liquid, and mixing the first ceramic dispersion liquid with the first nanofiber dispersion liquid to obtain the first slurry;
the preparing the second slurry comprises dispersing the second ceramic particles in a third solvent to obtain a second ceramic dispersion liquid, dispersing the second nanofiber material in a fourth solvent to obtain a second nanofiber dispersion liquid, and mixing the second ceramic dispersion liquid with the second nanofiber dispersion liquid to obtain the second slurry.

13. The preparation method of the coated separator according to claim 12, wherein, before the preparing the slurry, the preparation method further comprises:
ceramic screening: selecting the first ceramic particles and the second ceramic particles of different particle diameters, wherein the average particle diameter of the first ceramic particles is 100-600nm, and the average particle diameter of the second ceramic particles is 10-60nm; and
further comprises pretreatment of ceramic: performing a grafting reaction on the second ceramic particles and a material to be grafted, so that a surface of the second ceramic particle is grafted with a fast lithium-ion conductor functional group.

14. The preparation method of the coated separator according to claim 13, wherein the material to be grafted comprises any one of polycarbonate, polylactic acid, polyurethane, perfluoropropyl vinyl ether, and methyl ethyl propyl ketone.

15. A battery, comprising the coated separator according to any one of claims 1 to 11 or a coated separator prepared by the preparation method of the coated separator according to any one of claims 12 to 14; wherein
further, the battery is a lithium battery.
